# EUROPEAN PATENT APPLICATION

(11) **EP 3 190 673 A1**
(43) Date of publication of application: **12.07.2017**
(21) Application number: 16382006.1
(22) Date of filing: 07.01.2016
(51) Int. Cl.: H02G 1/08, G02B 6/44

(54) **CABLE DRIVE DEVICE, SYSTEM AND METHOD**

(71) Applicant: Fundacion Tekniker, 20600 Eibar (Guipuzkoa) (ES)
(72) Inventor: OLARRA URBERUAGA, Aitor, 20600 Eibar, Gipuzkoa (ES); GÓMEZ-ACEDO, Eneko, 20600 Eibar, Gipuzkoa (ES)
(74) Representative: Balder IP Law, S.L.

(57) **Abstract**

Drive device (1) for a first cable (5) which comprises fixing means (13) adapted for fixing the device (1) to the first cable (5) and pulling said first cable (5) along a route. The device (1) also comprises: a first element (11) inseparable from the fixing means (13); and a second element (12), connected to the first element by way of connection means (14) which allow relative movements between the first element (11) and the second element (12), said second element (12) being adapted for advancing along the route upon receiving a force in a first direction by way of a transmission system (2), said first element (11) remaining at rest. The first element (11) is adapted for advancing along said route upon receiving a force in a second direction by way of said transmission system (2), in turn causing said first cable (5) to advance, said second element (12) remaining at rest. The first cable (5) is thus provided with the capacity to be driven or be moved autonomously through tubes, locations which are difficult to access, etc.

## Description

### Field of the invention

The present invention relates to the field of installing wiring and more specifically to installing wiring by means of mechanical traction.

### Background of the invention

There are various situations in which it is required to advance a cable through spaces which are difficult to access, such as for example tubes or cracks. This is the case, amongst others, for installing electrical or communications wiring through the interior of conduits with a small diameter and long length; the introduction of sensors or cameras into spaces with the risk of collapse, radiation, chemical corrosion, etc.; the inspection of sewage, industrial installations or archeological complexes; the introduction of medical probes and even the deployment of devices for space exploration.

The most basic solution to this problem is to manually introduce the cable and push progressively. However, due to the lack of rigidity of the cable, it tends to bend, possibly ending up folding and becoming trapped. In order to solve this problem, a guide cable with greater rigidity can be introduced, the rear end of which is attached to the main cable to be installed. Once the guide cable is recovered at the end of the route, it is sufficient to pull it so that the main cable makes the same route. However, this method is only applicable for simple routes with access at both ends, being useless in certain cases such as in the case of having access at only one end of the route or of pronounced bends, open or bifurcated spaces existing in the path to be followed.

Other more complex strategies known in the prior art resort to pressurized fluids. This is the case for example with the methods presented by US 6631884 B2 and US 6116578 A. However, the use of additional substances involves greater complexity both during the installation and at the time of subsequently removing the fluid. Furthermore, these methods are only applicable for installing cables in simple tubes, perfectly sealed along the route thereof.

Lastly, systems for installing cables by means of mechanical traction are known using devices which are fixed to one end of the cable. For example, US 2006/0284149 A1 has a motorized device with wheels and a battery, adapted for advancing through a conduit, pulling the cable to be installed behind it. However, this system has certain limitations since it does not allow the movement to be controlled once initiated and when traction is exerted only on one end of the cable, the force thereof may be insufficient for driving heavy cables. Furthermore, it does not allow for controlled bends to be made.

Therefore, there continues to be a need for a drive technique for cables in spaces with difficult access, capable of being adapted to the flexibility and the weight of the cable, as well as to the topology of the space. Moreover, it is desirable for said technique to allow the movement to be dynamically controlled during the installation or operation of the cable, thereby facilitating the adaptation thereof to complex routes or changing settings.

### Description of the invention

The present invention solves the previous problems with one or a plurality of devices coordinated for driving cables by means of mechanical traction, each device having a first element inseparable from the cable and a second element connected to the first, such that said elements advance alternately when forces are received in opposing directions.
In a first aspect of the invention, a drive device for a first cable is presented, which for clarity will be termed main cable in the present document, the device being adapted for being fixed to said main cable by way of fixing means. The device is configured for alternately receiving traction forces in opposing directions by way of a transmission system. The device also comprises a first element inseparable from the fixing means and therefore to the main cable; and a second element, which, in spite of being physically connected to the first element by way of connection means, it not inseparable from the same. That is to say, the second element can carry out movements relative to the first element and therefore to the main cable.

The first element and the second element are configured for alternately advancing when the traction forces transmitted by the transmission system are received. That is to say, when a first force is received in a first direction, the first element advances along the route through which it is desired to drive the principal cable, while the second element and the main cable maintain the position thereof. On the contrary, when a second force is received in a direction opposite to the first force, the second element advances together with the main cable along the route while the first element maintains the position thereof. This is achieved by using, in the first element and in the second element, non-reversing movement systems with the same directions. An example of a non-reversing movement system which can be used are freewheel sprockets that can be actuated by forces in opposite directions. The wheels of the inseparable element and the wheels of the element with relative movement are moved in the same direction - the advance direction of the route - however they are activated from forces with an opposite direction. The invention can be implemented with any other mechanical technique known in the prior art which allows a non-reciprocal response depending on the direction of the traction force exerted.

In a second aspect of the invention, a cable drive system is presented which comprises one or a plurality of devices as has been described in the first aspect of the invention, preferably operating in a coordinated manner and being equidistant along the cable. The system also comprises force generation means adapted for generating traction forces alternating in two opposing directions as well as the transmission system previously mentioned which transmits the forces from the generation means to the plurality of devices.

In some embodiments of the invention, the force generation means comprise a lever which is alternately shifted in two opposing directions, although they can be implemented with any other technical solution capable of alternately generating traction in opposing directions. Moreover, in accordance with preferred options of the invention, the force generation means can be manual or comprise motorized elements for generating the traction.

Both ends of the transmission system are connected to the same force generation means. That is to say the transmission system carries out a return journey from the force generation means to the device furthest from said generation means. In one possible embodiment, the transmission system comprises a transmission cable, preferably a braided steel wire, sheathed in an intermediate sheath or covering made of polymeric material which provides low friction between both elements. More preferably, the transmission system comprises a transmission cable, preferably a braided steel wire which is guided by an exterior metallic covering, preferably in the form of a helix, for redirecting the forces and facilitating the transfer thereof. Between the transmission cable and the metallic covering, there is an intermediate sheath or covering made of polymeric material which provides low friction between both elements. The assembly formed by the transmission cable and the exterior metallic covering is, in turn, sheathed in a protective sheath made of polymeric material.

In a third aspect of the invention, a drive method for cables is presented which comprises the following stages:
- Alternately generating a first force and a second force in opposing directions. This stage can be carried out by alternately actuating via a lever in opposing directions. This stage can be carried out either manually, or automated by way of motorized elements.
- Transmitting the first force and the second force generated to at least one drive device by means of a transmission system. The transmission system comprises a transmission cable which is guided through an exterior metallic covering, preferably in the form of a helix, in turn, sheathed in a polymeric sheath with low friction, configured for guiding the transmission cable. Both ends of the transmission system are connected to a same element in which the first and second forces are generated.
- Alternately causing a first element of the device, inseparable from the main cable, and a second element of the device (separable from said main cable) to advance. That is to say, the method comprises converting the first force into an advance movement in the first element and converting the second force into an advance movement in the second element, such that both elements advance in the same direction when forces are received in opposing directions which generate opposite relative movements between the two elements. This is achieved by means of a non-reversing system. In one specific implementation, this is achieved by means of freewheel sprockets.

The device, system and method of the invention thus allow the driving of flexible and heavy cables following routes which are not limited to the routing of a tube, but which allow the cable to be driven in open spaces, avoid curves, corners, etc. That is to say, the cable does not need to be tractioned at the front end or at the rear end. As is clear in this text, the cable is driven by the two elements which, in turn, are driven by the transmission system, as is explained throughout this description.

Moreover, the device, system and method allow the movement of the cable to be dynamically controlled, being adapted to changing settings or settings unknown a priori. Additionally, they do not require additional materials which have to be subsequently removed, nor sealed environments and use a single access point to the space.

These and other advantages will become apparent in light of the detailed description of the invention.

The different aspects and embodiments of the invention defined above can be combined with each other.

### Brief description of the figures

In order to complement the description and with the aim of aiding a better understanding of the characteristics of the invention, in accordance with a practical exemplary embodiment of the same, a set of figures is enclosed as an integral part of the description, in which the following is depicted in an illustrative and non-limiting manner:
Figure 1 presents a schematic view of the system of the invention and of the main cable on which it is applied in accordance with a particular embodiment of the same.
Figure 2 shows, in greater detail, a perspective view of the drive device and of the transmission system of the invention, in accordance with particular embodiments of the same, as well as the main cable on which they are applied.
Figure 3 presents, in greater detail, a particular embodiment of the force generation means of the invention based on a lever.
Figures 4a, 4b and 4c illustrate the functioning of a particular embodiment of the invention by way of three stages of driving of the main cable.
Figure 5 shows a lower view of the drive device and of the transmission system of the invention in accordance with particular embodiments of the same as well as the main cable on which they are applied.
Figure 6 shows a view of the complete drive system in accordance with a possible embodiment of the invention.

### Description of an embodiment of the invention

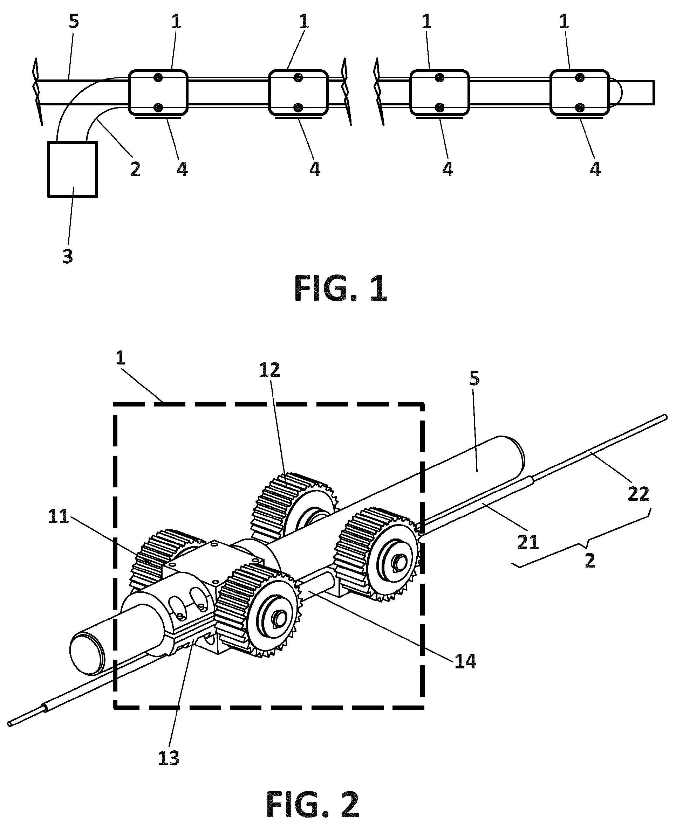

Figure 1 shows the main elements of a particular embodiment of the system of the invention which, in turn, implements the stages of a particular embodiment of the method of the invention.

In the preferred embodiment shown in figure 1, the drive system of the invention comprises a plurality of drive devices 1 (or relative movement subsystems) preferably equidistant along a main cable 5 and which operate in coordination. It should be noted that said main cable 5 is not an object of the present invention, it being able to be a cable of any functionality, weight and degree of flexibility and this cable also being able to incorporate any additional element, such as for example cameras or sensors. It should also be noted that the broken lines of the figure depict segments of the same main cable 5. The system can also incorporate any additional auxiliary element which cooperates in the guiding of the main cable 5, such as for example robotized elements which modify the advance direction in real time.

The system also comprises force generation means 3 which generate traction forces in two opposing directions in an alternate manner, and a transmission system 2 which acts as force transmission means, causing said traction forces to arrive to the devices 1. Each device 1 also has non-reversing movement systems 4 which allow a different part of the device 1 to advance with each direction of force transmitted as is detailed below. Said non-reversing movement systems 4 can comprise, for example, freewheel sprockets, which allow rotation in one direction, but not in the other. A freewheel sprocket is a system installed on a rotation axis which allows a plurality of sprockets to rotate freely in one direction, but does not allow rotation in the opposite direction.

Figure 2 illustrates, in greater detail, the components of a particular embodiment of each drive device 1 and the transmission system 2 of the invention. The transmission system 2 comprises a transmission cable 22 and a sheath 21 in which the transmission cable 22 is guided or sheathed. The transmission cable 22 is preferably flexible. The transmission cable 22 is also preferably metallic, more preferably steel (braided steel wire). More preferably, the transmission cable 22 is guided along an exterior metallic covering, preferably in the form of a helix, not illustrated, in order to redirect the forces and facilitate the transfer thereof. Between the transmission cable 22 and the exterior metallic covering, there is the sheath 21 made of polymeric material which provides low friction between both elements. Also preferably, the assembly formed by the transmission cable and the exterior metallic covering is, in turn, sheathed in a protective sheath made of polymeric material.

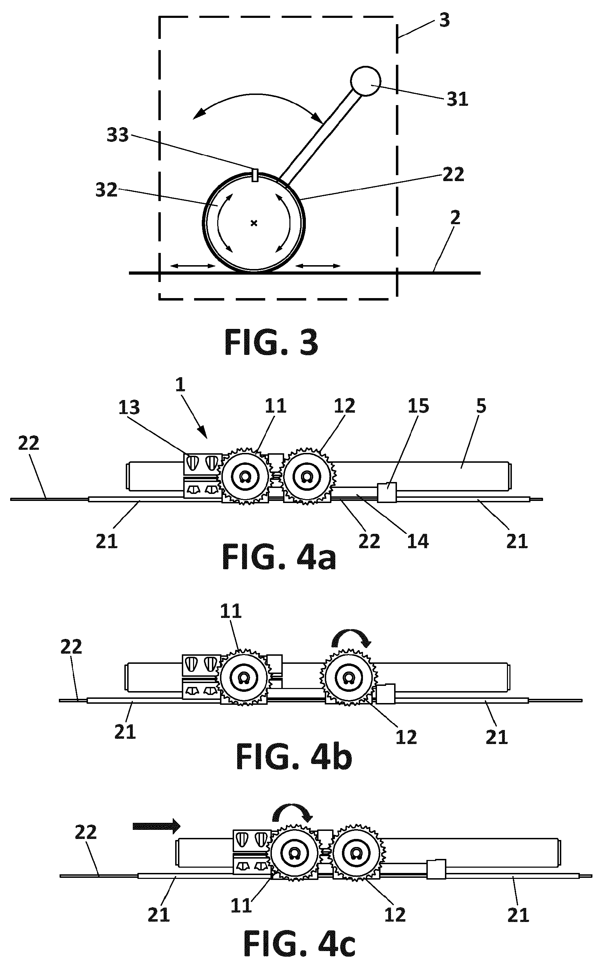

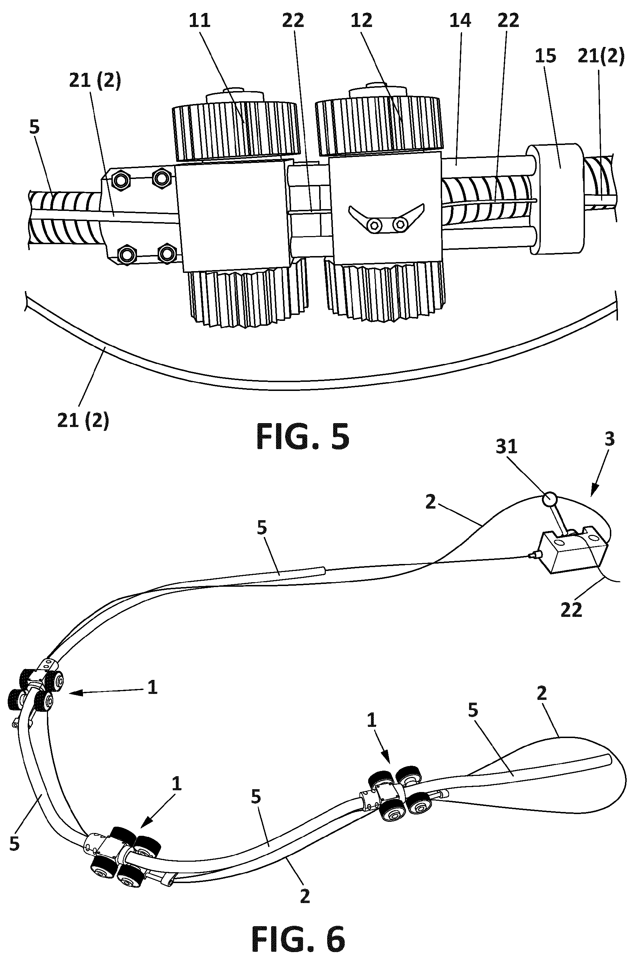

Both the transmission cable 22 and the sheath 21 thereof and the metallic helix, as well as the outermost sheath, are conventional and do not form part of the present invention. In a non-limiting manner, the transmission system 2 can be formed by the cable and sheath known as a Bowden cable. The functioning of the transmission system 2 is detailed below, in relation to Figures 4a-4c and 5. The device 1 comprises a first element 11 and a second element 12, which for clarity, will be termed inseparable element (from the main cable) 11 and separable element (from the main cable 5) 12, respectively. The first element 11 and the second element 12 comprise non-reversing movement systems 4 shown in Figure 1. The inseparable element 11 maintains the position thereof fixed with respect to the main cable 5 by means of fixing means 13, while the separable element 12 can carry out relative linear movements with respect to the main cable 5 and to the inseparable element 11, although it is physically joined to these by means of connection means 14 which are detailed below.

In the embodiment shown, both the inseparable element 11 and the separable element 12 comprise two or a plurality of freewheel sprockets; the exterior structure of the wheels can be adapted to the particular surface of the implemented application. It should be noted that in the embodiment shown, both in the case of the inseparable element 11 and the separable element 12, the main cable 5 is located between the wheels during the entire operation of the device 1. In the particular case of Figure 2, the fixing means 13 comprise a rigid structure assemblable with screws; however, they can be substituted for any other fixing means 13 known in the prior art which guarantees the inseparable movement of the main cable 5 and of the inseparable element 11. Likewise, the connection means 14 comprise a linear guide, such that the separable element 12 can slide on said linear guide 14 along the two ends thereof, one of which is close to the inseparable element 11 and the other end is distant from the inseparable element 11. The length of the linear guide 14 determines the advance of the device 1 and therefore of the main cable 5, in each pair of forces exerted by the force generation means 3. In one particular embodiment, the connection means 14 comprise two metallic guides and frictional bearings. These connection means 14 can be substituted for any mechanical solution known in the prior art which allows relative linear movements between the inseparable element 11 and the separable element 12 within a predetermined range of movement.

Figure 3 presents, in greater detail, an embodiment of the force generation means 3 based on a lever 31 which is alternately shifted between two limit positions, causing a cylinder 32, around which the transmission cable 22 is rolled, to rotate. Said transmission cable 22 is fixed to the cylinder 32 by means of one or a plurality of contact points 33, therefore converting the movement of the lever into traction forces which alternate between opposing directions. It should be noted that the force generation means 3 described can incorporate both manual elements and motorized elements, also being able to be controlled locally or remotely. Moreover, the particular mechanical elements of the force generation means 3 can be substituted for any other configuration known in the prior art capable of generating the traction forces described.

The transmission system 2 is made up of a return route, that is to say, it reaches to the frontal end of the main cable 5 and then returns to the end at which the force generation means 3 are located. This return is possible owing to the fact that the transmission cable 22 is sheathed in the sheath 21. The transmission cable 22 is thus sheathed along the entire return route except for the passage thereof through each device 1. As is shown in Figures 4a-4c and 5, when it reaches the device 1, the transmission cable 22 is open to the air (without sheath 21) from the fixing means 13 to the stop 15 which defines the end of the connection means 14 furthest from the inseparable element 11. The sheath 21 is fixed to the start of the device 1. In a preferred embodiment, the sheath 21 is fixed to the fixing means 13. The transmission cable 22, without sheath from this point, continues along the route thereof until it reaches the stop 15, where it becomes sheathed again in the sheath 21. The sheath 21 is fixed to the end of the device 1. The sheath 21 can be fixed to the ends between which the cable travels without sheath or it can be left without being fixed. In one possible embodiment, the sheath 21 is fixed to the stop 15 and from there the transmission cable 22 returns to travelling sheathed. That is to say, the sheath 21 does not move with respect to the stop 15 and therefore the sheath does not move with respect to the connection means 14. The transmission cable 22 is attached or fixed to each one of the separable elements 12 of the respective devices 1 on the passage thereof though the same, on the outbound or inbound route, but not both. Upon being attached or fixed, the transmission cable 22, on the passage thereof through the separable elements 12 of each device 1 and owing to the fact that the sheath 21 exerts reaction forces on the inseparable element 11, it is achieved that two forces in opposing directions and in an alternate manner are transmitted to each separable element 12 (forces generated by the force generation means 3 and transmitted by means of the transmission system 2 ("pulling" the transmission cable 22 or pushing the same, alternately), which is joined at the ends thereof to the force generation means 3 forming a closed loop).

Figures 4a, 4b and 4c illustrate the functioning of particular embodiments of the method, system and device of the invention. Figure 4a illustrates a starting position, in which the inseparable element 11 and the separable element 12 are in the position thereof closest to one each other. That is to say, the separable element 12 has slid on the linear guide 14 and is situated at the end of the same closest to the inseparable element 11. Subsequently, upon the force generation means 3 are actuated, a force is applied on the transmission cable 22. That is to say, the transmission cable 22 is pulled. And as the transmission cable 22 is fixed to the separable element 12, when the transmission cable 22 is pulled, the separable element 12 advances along the connection means 14, as the arrow drawn on the separable element 12 indicates in Figure 4b. In other words, as is shown in Figure 4b, upon transmitting a pair of action and reaction forces by way of the transmission cable 22 and the sheath 21, it causes the inseparable element and the separable element to separate, the separable element 12 advancing by rolling while the inseparable element 11 maintains its position due to the fact that its freewheel system does not allow the rotation (rolling) in the direction opposite to the desired advance direction. Preferably, the device 1 has a stop 15 which guarantees the stopping of the separable element 12.

Lastly, in Figure 4c, upon actuating the force generation means 3 in the direction opposite to the previous actuation, an equal modulus force is exerted but in the opposite direction on the transmission cable 22. That is to say, the transmission cable 22 is pushed. In this case, although the transmission cable 22 is fixed to the separable element 12, as the latter cannot slide in the opposite direction due to the reaction force which the sheath exerts on the element 11 inseparable from the main cable, it is the inseparable element 11 which advances along the connection means 14, as the arrow drawn on the inseparable element 11 indicates in Figure 4c. In other words, a pair of action and reaction forces is transmitted by way of the transmission cable and the sheath such that it causes the inseparable and separable elements to come together. Given that the separable element 12 cannot return due to the effect of the non-reversing movement system, it is the inseparable element 11 which advances, carrying the main cable 5 with it. That is to say, since the sheath 21 is fixed to the inseparable element 11 (or to the fixing means 13), upon pushing the transmission cable 22 without the separable element 12 returning, the force applied by the sheath on the inseparable element causes the latter to advance in the desired direction, approaching the separable element 12 and pulling with it the main cable 5. If the separable element 12 could move in the two directions, upon exerting this force, the separable element 12 would move towards the inseparable element 11, pulled by the transmission cable 22, returning to the position of Figure 4a. However, as the separable element 12 is based on a system which is only capable of advancing in one direction, the advance in the opposite direction being stopped or prevented (for example, freewheel system), upon exerting this force by way of the transmission cable 22 the separable element 12 remains static in its position acquired in the previous stage. And as the inseparable element 11 bears, in a fixed manner, the cable 5 which one wishes to advance, it is advanced with alternate impacts of force exerted. It is thereby achieved that the main cable 5 advances in successive controlled steps.

That is to say, the use of a transmission cable 22 sheathed in the sheath 21 allows the force transmitted to be redirected along the entire route thereof. Lastly, the action and reaction effect described by Newton's third law causes the inseparable element 11 to advance in the desired direction, in the face of an external force exerted by the transmission cable 22 on each separable element 12 in the direction opposite to the desired advance, and given that said separable element 12 cannot return through the freewheel system.

In the embodiment of Figure 5, it is shown how the transmission cable 22 is attached or fixed to the separable element 12. In Figure 5, the sheath 21 through which the transmission cable 22 runs is also shown. In the illustrated embodiment, the transmission cable 22 is fixed to the separable element 12 by means of two screws. Any person skilled in the art would understand that other conventional fixing means can alternatively be used. It is also shown how the sheath 21 disappears between the inseparable element 11 and the stop 15. It is also shown how at the front end of the main cable 5, the transmission system 2 (the sheath 21 and the transmission cable 22 in the interior thereof) turns around, thereby achieving the return of the transmission cable 22 and redirecting the transmission force.

Figure 6 shows a view of the complete drive system according to a possible embodiment of the invention. It is observed how the transmission system 2 has a return route, that is to say, it arrives at the front end of the main cable 5 and then returns to the end at which the force generation means 3 are located. Three drive devices 1 are illustrated like those shown in Figure 2.

The device, method and system of the invention can be applied to a wide variety of fields, including the following examples:
- Robotics: autonomous drive of the cable of the robot when said robot does not have the force required to pull it,
- Large industrial installations: introduction into places which are difficult to access for autonomous robots for inspection or maintenance work.
- Electrical sector: Voltage cable installation through the interior of conduits with small diameter and long length.
- Nuclear plants: introduction of sensors or cameras into spaces flooded with radiation in routine monitoring operations or crisis situations.
- Communications sector: installation of communications cables through the interior of conduits with small diameter and long length.
- Petroleum and natural gas sector: introduction of a camera for the internal inspection of tube installations with long length, for example for checking damage or foreign bodies obstructing the flow.
- Chemical industry: introduction of a camera for the internal inspection of vertical chimneys with the aim of monitoring chemical corrosion.
- Mining and speleology: access by way of cracks or small openings to inaccessible spaces with the aim of introducing a noxious gas sensor or a camera for carrying out a visual inspection.
- Rescue operations: visual inspection in the interior of buildings destroyed by introducing a camera through the interior of a tube or through debris.
- Maintenance of municipal waste installation: monitoring of the sewage or waste management conduits where the environment is not suitable for humans due to the noxious gases and diseases.
- Medicine: introduction of probes through the interior of blood vessels or intestines.
- Archeology: inspection of sealed rooms by introducing cameras through long ventilation conduits with small opening.
- Toys: caterpillars or snakes that walk on their own
- Space exploration: new type of propulsion for deploying probes, scientific experiments or solar panels.

In this text, the word "comprise" and the variants thereof (such as "comprising", etc.) should not be interpreted in an exclusionary manner, that is to say, they do not exclude the possibility of that which has been described including other elements, stages etc.

Moreover, in the context of the present text, the word "alternatively" referring to the forces applied from the force generation means which are transmitted from the device of the invention, should be understood in its fullest sense as "in an alternative manner", that is to say "one after the other" and not in the sense of "as an alternative" or "to replace".

In addition, the invention is not limited to the specific embodiments which have been described, but they also encompass, for example the variants which can be implemented by the person skilled in the art (for example in terms of the selection of materials, dimensions, components, configuration, etc.) within the scope which can be deduced from the claims.

## Claims

1. A drive device (1) for a first cable (5) which comprises fixing means (13) adapted for fixing the device (1) to the first cable (5) and pulling said first cable (5) along a route, **characterized in that** it also comprises:
- a first element (11) inseparable from the fixing means (13);
- a second element (12), connected to the first element by way of connection means (14) which allow relative linear movements between the first element (11) and the second element (12), said second element (12) being adapted for advancing along the route upon receiving a force in a first direction by way of a transmission system (2), said first element (11) remaining at rest;
said first element (11) being adapted for advancing along said route upon receiving a force in a second direction by way of said transmission system (2), in turn causing said first cable (5) to advance, said second element (12) remaining at rest.

2. The device according to claim 1, wherein upon advancing, the second element (12) slides along said connection means (14).

3. The device according to claim 1 or 2, wherein said first element (11) and second element (12) are configured for advancing in one single direction.

4. The device according to claim 3, wherein the first element (11) and the second element (12) comprise freewheel sprockets.

5. The device according to any one of the preceding claims, wherein said transmission system (2) comprises a transmission cable (22) sheathed in a sheath (21).

6. The device according to claim 5, wherein said transmission cable (22) is fixed to said second element (12).

7. A drive system for a first cable (5), **characterized in that** it comprises:
- at least one device (1) according to any one of claims 1 to 6;
- force generation means (3) adapted for alternately generating forces in two opposite directions; and
- a transmission system (2) adapted for transmitting the forces generated to the at least one device (1).

8. The system according to claim 7, wherein the force generation means (3) comprise a lever (31), said force generation means (3) being capable of being manual means or motorized means.

9. The system according to any one of claims 7 to 8, wherein said transmission system (2) comprises a transmission cable (22) sheathed in a sheath (21).

10. The system according to claim 9, wherein the force generation means (3) are connected to two ends of said transmission cable (22).

11. A drive method for a first cable (5) which comprises:
fixing the first cable (5) to at least one device (1) configured for pulling said first cable (5) along a route, **characterized in that** it also comprises:
- alternately generating a first force and a second force in opposing directions;
- transmitting the first force and the second force generated to the at least one device (1) by way of a transmission system (2);
- causing a first element (11) of the device (1) to advance along the route upon receiving the first force, the first element (11) being inseparable from the fixing means (13);
- causing a second element (12) of the device (1) to advance along the route upon receiving the second force, the second element (12) being connected to the first element by way of connection means (14) which allow relative movements between the first element (11) and the second element (12).

12. The method according to claim 11, wherein the steps for causing the first element (11) and the second element (12) to advance along the route comprise rotating freewheel sprockets.

13. The method according to any one of claims 11 or 12, wherein the step of alternately generating the first force and the second force is carried out manually or using motorized elements.

14. The method according to any one of claims 11 to 13, wherein alternately generating the first force and the second force comprises alternately shifting a lever (31) in opposite directions.

15. The method according to any one of claims 11 to 14, wherein the step of transmitting the first force and the second force generated uses a transmission cable (22) included in said transmission system (2), wherein the two ends of said transmission cable (22) are connected to the same force generation means (3).
